# EUROPÄISCHE PATENTSCHRIFT

(11) **EP 3 356 080 B1**
(45) Veröffentlichungstag und Bekanntmachung des Hinweises auf die Patenterteilung: **16.03.2022**
(21) Anmeldenummer: 16757675.0
(22) Anmeldetag: 30.08.2016
(51) Int. Cl.: B25J 15/02, B25J 17/02

(54) **WERKZEUGMASCHINE MIT EINER TRANSPORTVORRICHTUNG ZUM TRANSPORTIEREN EINES WERKSTÜCKS**
MACHINE TOOL WITH A CONVEYING DEVICE FOR CONVEYING A WORKPIECE
MACHINE-OUTIL AVEC UN DISPOSITIF DE TRANSPORT POUR TRANSPORTER UNE PIÈCE

(30) Priorität: 30.09.2015 DE 102015116582
(43) Veröffentlichungstag der Anmeldung: 08.08.2018
(73) Patentinhaber: Walter Maschinenbau GmbH, 72072 Tübingen (DE)
(72) Erfinder: GUSSMANN, Lukas, 72762 Reutlingen (DE)
(74) Vertreter: Rüger Abel Patentanwälte PartGmbB
(86) Internationale Anmeldenummer: PCT/EP2016/070345
(87) Internationale Veröffentlichungsnummer: WO 2017/054995

(56) Entgegenhaltungen:
- EP-A1- 0 087 996
- EP-A1- 1 970 171
- EP-A1- 1 982 799
- EP-A2- 1 046 461
- CN-U- 202 622 803
- JP-A- H07 228 354

## Beschreibung

Die Erfindung betrifft eine Werkzeugmaschine mit einer Transportvorrichtung zum Transportieren eines zumindest abschnittsweise stabförmigen Werkstücks zwischen einem Spannfutter und einem Werkstückträger in der Werkzeugmaschine.

Geräte zum Werkstücktransport sind in verschiedenen Formen bekannt. Zum Beispiel beschreibt EP 1 982 799 A1 eine Handhabungsanordnung mittels dem Werkstücke aus einem Magazin entnommen werden können und zu einer Öffnung einer Werkzeugmaschine transportiert werden können, wobei die Handhabungsanordnung zwischen dem Magazin und der Werkzeugmaschine angeordnet ist. Die Handhabungsanordnung hat einen Horizontalausleger mit einem über eine vertikale Schwenkachse angelenkten Schwenkarm, der an seinem anderen Ende einen Greifer mit einer zweiten Schwenkachse aufweist. Die zweite Schwenkachse ist um 45° geneigt zu vertikalen ersten Schwenkachse ausgerichtet.

Aus der Praxis sind eine Vielzahl von Werkstückwechseleinrichtungen bekannt. Häufig werden Greifer oder Doppelgreifer zum Werkstückwechsel verwendet.

Beispielsweise zeigt DE 1 074 367 A eine Werkstückwechseleinrichtung mit einem aktiven Magazin, das eine Transporteinrichtung zum Transportieren der Werkstücke in eine Wechselposition aufweist. Zwischen dem Magazin und dem Spannfutter zum Einspannen des Werkstücks ist ein Doppelgreifer vorgesehen. Dieser kann das eingespannte Werkstück sowie das in der Wechselposition im Magazin befindliche Werkstück gleichzeitig ergreifen und durch eine 180° Schwenkbewegung austauschen.

Aktive Magazine mit einer eigenen Transporteinheit sind aufwendig und benötigen in der Regel viel Platz. Au-ßerdem ist eine Steuerung notwendig, die die Transporteinrichtung des Magazins mit der Greifeinrichtung koordiniert ansteuert.

Roboter mit einem Greifer oder Doppelgreifer, die eine hohe Anzahl an Freiheitsgraden aufweisen und daher für verschiedenste Anwendungen geeignet sind, können unabhängig von der Werkzeugmaschine auch zum Werkstückwechsel verwendet werden.

Aufgabe der vorliegenden Erfindung ist es, eine Werkzeugmaschine mit einer Transportvorrichtung zum Transportieren eines Werkstücks zwischen einem Spannfutter und einem Werkstückträger zu schaffen, die auf einfache Weise in die Werkzeugmaschine integriert ist.

Diese Aufgabe wird durch eine Werkzeugmaschine mit den Merkmalen des Patentanspruches 1 gelöst.

Die erfindungsgemäße Werkzeugmaschine weist eine Transportvorrichtung auf, die dazu eingerichtet ist, ein zumindest abschnittsweise stabförmiges Werkstück zwischen einem Spannfutter und einem Werkstückträger in der Werkzeugmaschine zu transportieren. Vorzugsweise ist die gesamte Vorrichtung einschließlich des Werkstückträgers innerhalb eines Maschinengehäuses integriert angeordnet.

Das abschnittsweise stabförmige Werkstück weist beispielsweise einen zylindrischen Abschnitt auf, der im Querschnitt kreisrund oder polygonal ausgeführt sein kann. Das Werkstück kann insgesamt zylindrisch sein oder im Anschluss an den zylindrischen bzw. stabförmigen Abschnitt eine andere Kontur aufweisen. Der zylindrische oder stabförmige Abschnitt dient zum Handhaben des Werkstücks und zum Einspannen des Werkstücks in das Spannfutter.

Die Transportvorrichtung hat eine Greifeinrichtung mit einem Schwenkarm. Ein Lagerende des Schwenkarms ist mittels eines ersten Schwenkantriebs schwenkbar an der Werkzeugmaschine gelagert, vorzugsweise an einem Schlitten der Werkzeugmaschine. Der erste Schwenkantrieb definiert eine erste Schwenkachse, um die der Schwenkarm schwenkbar ist. An dem von dem Lagerende abgewandten anderen, freien Ende trägt der Schwenkarm einen zweiten Schwenkantrieb. An dem zweiten Schwenkantrieb ist wiederum ein Werkstückgreifer zum Greifen des Werkstücks angeordnet. Der Werkstückgreifer ist mittels des zweiten Schwenkantriebs um eine zweite Schwenkachse gegenüber dem Schwenkarm schwenkbar gelagert.

Eine Steuereinrichtung dient zur Ansteuerung der beiden Schwenkantriebe. Die erste Schwenkachse erstreckt sich in eine Längsrichtung der Werkzeugmaschine. Vorzugsweise ist die erste Schwenkachse horizontal ausgerichtet. Die zweite Schwenkachse ist gegenüber der Längsrichtung um 45° geneigt. Die Neigung zwischen der ersten Schwenkachse und der zweiten Schwenkachse bleibt in jeder Schwenkstellung des Schwenkarms aufrecht erhalten.

Das Werkstück erstreckt sich entlang einer Werkstücklängsachse. Ist das Werkstück von dem Werkstückgreifer gehalten, erstreckt sich die Werkstücklängsachse gegenüber der zweiten Schwenkachse um 45° geneigt. Mittels des zweiten Schwenkantriebs kann der Werkstückgreifer zwischen einer ersten Lage und einer zweiten Lage bewegt werden. Vorzugsweise wird der zweite Schwenkantrieb um die zweite Schwenkachse um 180° gedreht um den Werkstückgreifer von der ersten Lage in die zweite Lage zu bewegen bzw. umgekehrt. Der Drehsinn des zweiten Schwenkantriebs bei der Bewegung zwischen den beiden Lagen ist vorzugsweise unterschiedlich und hängt davon ab, ob die erste Lage oder die zweite Lage die Ausgangsposition der Schwenkbewegung ist. Bei der Bewegung zwischen den beiden Lagen ist vorzugsweise kein Stillstand des zweiten Schwenkantriebs vorgesehen.

Die Werkstücklängsachse ist in der ersten Lage rechtwinklig zu der Längsrichtung und in der zweiten Lage parallel zu der Längsrichtung ausgerichtet. Der Abstand des Werkstückgreifers von der ersten Schwenkachse ist in der ersten Lage kleiner als in der zweiten Lage. Durch das Bewegen des Werkstückgreifers von der ersten Lage in die zweite Lage wird zum einen die Orientierung der Werkstücklängsachse um 90° geändert und zum anderen wird es in einer Höhenrichtung rechtwinklig zur Längsrichtung bewegt. Dadurch kann der Höhenunterschied zwischen dem Werkstückträger einerseits und dem Spannfutter andererseits sehr schnell überwunden werden. Das Werkstück bewegt sich entlang einer Bahn, die einem Abschnitt einer Kegelstumpfmantelfläche entspricht. Diese Bewegung des Werkstücks kann anhand des zweiten Schwenkantriebs schnell erfolgen und ermöglicht daher eine rasche Überbrückung der Distanz zwischen dem Werkstückträger und dem Spannfutter bei gleichzeitiger Lageänderung der Werkstücklängsachse. Zur Feinjustierung der Ausrichtung der Werkstücklängsachse entlang einer Spannachse des Spannfutters sowie zum Einfuttern des Werkstücks in das Spannfutter kann wenigstens eine ohnehin vorhandene Maschinenachse der Werkzeugmaschine verwendet werden.

Die Greifeinrichtung weist vorzugsweise ausschließlich die beiden Schwenkantriebe und einen Greifantrieb am Werkstückgreifer auf, mittels dem das Werkstück geklemmt werden kann. Alle anderen erforderlichen Bewegungen werden über die Maschinenachsen der Werkzeugmaschine ausgeführt.

Vorzugsweise sind sämtliche Antriebe der Greifeinrichtung rein pneumatisch ausgeführt. Über einen Pneumatikeinrichtung bzw. eine Pneumatikantriebsanordnung werden die beiden Schwenkantriebe sowie der Greifantrieb mit Druckluft versorgt und gesteuert beaufschlagt. Hydraulische Antriebe und Elektromotoren sind vorzugsweise nicht vorhanden. Elektrische Antriebe sind insbesondere nur insoweit vorhanden, als pneumatische Bauelemente zwischen Schaltstellungen oder Positionen bewegt werden.

Es ist vorteilhaft, wenn der Werkstückträger mehrere Aufnahmeplätze für jeweils ein Werkstück aufweist. Die Aufnahmeplätze sind derart eingerichtet, dass sich die Werkstücklängsachse eines im einen Aufnahmeplatz angeordneten Werkstücks in etwa in Höhenrichtung rechtwinklig zur Längsrichtung bzw. zur ersten Schwenkachse erstreckt. Die Aufnahmeplätze des Werkstückträgers sind vorzugsweise in Höhenrichtung oberhalb der Spannachse des Spannfutters angeordnet. Der Werkstückträger kann beispielsweise ein Werkstückregal mit einer horizontalen Regalfläche aufweisen. Auf dieser Regalfläche können eine oder mehrere Magazinpaletten mit den Aufnahmeplätzen angeordnet sein.

Es ist vorteilhaft, wenn der Werkstückgreifer eine Greiferachse definiert, derart, dass die Werkstücklängsachse eines von dem Werkstückgreifer gehaltenen Werkstücks mit der Greiferachse übereinstimmt. Die Greiferachse ist vorzugsweise unabhängig von der Drehposition des Werkstückgreifers um die zweite Schwenkachse immer um 45° gegenüber der zweiten Schwenkachse geneigt.

Es ist vorteilhaft, wenn der Werkstückgreifer zwei relativ zueinander bewegliche Greiferbacken aufweist. Eine Greiferbacke oder beide Greiferbacken sind linear oder schwenkbar gegeneinander beweglich. Zum Bewegen wenigstens einer Greiferbacke dient der Greiferantrieb. Die Greiferbacken haben jeweils eine oder mehrere sich in Richtung der Greiferachse erstreckende Klemmstellen. Beispielsweise können die Greiferbacken eine oder mehrere Anlageflächen aufweisen. Der zylindrische Abschnitt des Werkstücks liegt in Richtung der Greiferachse linienhaft oder flächig an den Klemmstellen an. Vorzugsweise hat zumindest eine der Greiferbacken eine sich in Richtung der Greiferachse erstreckende nutförmige prismatische Vertiefung, die im Querschnitt beispielsweise V-förmig sein kann.

Der Schwenkarm befindet sich zum Transport eines Werkstücks in einer Arbeitsstellung. Dabei erstreckt er sich ausgehend von der ersten Schwenkachse im Wesentlichen in Höhenrichtung zum Werkstückträger bzw. dem Spannfutter hin. In einer Ruhestellung erstreckt sich der Schwenkarm ausgehend von der ersten Schwenkachse in etwa in eine Querrichtung, die rechtwinklig zur Höhenrichtung und rechtwinklig zur Längsrichtung ausgerichtet ist. In seiner Ruhelage ist der Schwenkarm gegenüber der Höhenrichtung zumindest um einen Winkel von wenigstens 45° und vorzugsweise wenigstens 70 bis 80° geschwenkt.

Es ist vorteilhaft, wenn die Greiferachse in der ersten Lage des Werkstückgreifers parallel zu der Werkstücklängsachse eines in einem Aufnahmeplatz des Werkstückträgers angeordneten Werkstücks ausgerichtet ist. Dadurch kann das Werkstück mit einer einfachen Linearbewegung einer Maschinenachse, die die Greifeinrichtung und den Werkstückträger relativ zueinander bewegt, zwischen die Greiferbacken positioniert und ergriffen oder im Magazin abgelegt werden. Jeder der Aufnahmeplätze des Werkstückträgers kann ein Aufnahmeloch aufweisen, dessen Längsachse in Höhenrichtung ausgerichtet ist.

Der Schwenkarm ist mittels des ersten Schwenkantriebes an einem Maschinenschlitten der Werkzeugmaschine angeordnet. Der Maschinenschlitten kann über die mindestens eine Maschinenachse in jeweils einem Freiheitsgrad relativ zu dem Spannfutter und dem Werkstückträger bewegt werden. Der Maschinenschlitten ist vorzugsweise in einem oder zwei Freiheitsgraden linear über jeweils eine Maschinenachse bewegbar. Bei einem Ausführungsbeispiel kann der Maschinenschlitten über zwei Maschinenachsen in Höhenrichtung sowie in Querrichtung bewegt werden.

Außerdem kann wenigstens eine Maschinenachse zur Bewegung des Spannfutters in jeweils einem Freiheitsgrad relativ zu dem Schwenkarm vorhanden sein. Bevorzugt ist das Spannfutter über eine Maschinenachse in einem linearen Freiheitsgrad in Längsrichtung bewegbar. Außerdem kann eine Drehachse als Maschinenachse vorhanden sein, mittels der das Spannfutter um eine in Höhenrichtung verlaufende Drehachse rotativ bewegt werden kann.

Die Steuereinrichtung ist bei einem Ausführungsbeispiel dazu eingerichtet, die wenigstens eine Maschinenachse zum Transport des Werkstücks anzusteuern. Dabei kann es sich um eine Maschinenachse zur Bewegung des Maschinenschlittens und/oder zur Bewegung des Spannfutters relativ zum Maschinengestell der Werkzeugmaschine handeln.

Die Steuereinrichtung kann außerdem dazu eingerichtet sein, ein aus dem Werkstückträger entnommenes Werkstück mittels wenigstens einer Maschinenachse in eine Schwenktransferposition zu transportieren. Der Werkstückgreifer ist in der Schwenktransferposition insbesondere in seiner ersten Lage. Dabei kann sich die Werkstücklängsachse in Höhenrichtung erstrecken und kann die zweite Schwenkachse in einem Schnittpunkt schneiden. Die Werkstücklängsachse und die zweite Schwenkachse können auch windschief zueinander angeordnet sein, wobei der Schnittpunkt dann durch eine Projektion der Werkstücklängsachse und der zweiten Schwenkachse in eine gemeinsame Ebene ergibt, die durch die Höhenrichtung und die Längsrichtung aufgespannt ist. Der Schnittpunt befindet sich in der Schwenktransferposition in Längsrichtung vorzugsweise hinter der Einspannöffnung des Spannfutters, in die das Werkstück eingesetzt werden soll.

Vorzugsweise ist die Spannachse des Spannfutters beim Einsetzen eines Werkstücks in oder Entnehmen eines Werkstücks aus der Einspannöffnung in Längsrichtung ausgerichtet. Es ist außerdem möglich, dass die Spannachse des Spannfutters den Schnittpunkt schneidet oder einen Maximalabstand von diesem Schnittpunkt aufweist. Dadurch ist es möglich, allein durch die Schwenkbewegung mittels des zweiten Schwenkantriebs zwischen der ersten Lage und der zweiten Lage eine Grobjustierung des Werkstücks zum Einspannen in das Spannfutter zu erreichen. Gegebenenfalls kann anschließend eine Feinjustierung unter Verwendung der wenigstens einen Maschinenachse in Höhenrichtung und/oder Querrichtung ausgeführt werden. Diese Feinjustierung ist wegen der geringen Weglänge mit hoher Genauigkeit ausreichend schnell durchführbar.

Die Steuereinrichtung ist bei einem bevorzugten Ausführungsbeispiel dazu eingerichtet, das in der Schwenktransferposition positionierte Werkstück mittels einer Schwenkbewegung durch den zweiten Schwenkantrieb in eine Futtertransferposition zu bewegen. In der Futtertransferposition ist die Werkstücklängsachse parallel zu der Spannachse des Spannfutters ausgerichtet. Zum Bewegen des Werkstücks zwischen der Schwenktransferposition und der Futtertransferposition wird vorzugsweise ausschließlich der zweite Schwenkantrieb verwendet.

Der Maximalabstand, der zwischen der Spannachse und dem Schnittpunkt vorhanden sein kann, ist derart vorgegeben, dass die Werkstücklängsachse mittels der wenigstens einen vorhandenen Maschinenachse innerhalb einer Zeitdauer von höchstens 1,5 Sekunden oder höchstens 1,0 Sekunden mit der erforderlichen Toleranz entlang der Spannachse ausgerichtet werden kann. Die Toleranz ist dabei insbesondere kleiner als 1,0 mm oder kleiner als 0,5 mm. Der Maximalabstand zwischen der Spannachse und dem Schnittpunkt beträgt vorzugsweise höchstens 4,0 cm oder höchstens 2,0 cm oder höchstens 1,0 cm.

Es ist außerdem vorteilhaft, wenn der Abstand des in der Schwenktransferposition angeordneten Werkstücks vom Schnittpunkt gemessen in der Höhenrichtung mindestens so groß ist wie der Abstand einer Einspannöffnung bzw. einer Einspannseite des Spannfutters von dem Schnittpunkt, gemessen in Längsrichtung. Dadurch ist sichergestellt, dass durch die Schwenkbewegung mittels des zweiten Schwenkantriebs ohne zusätzliche Bewegung einer Maschinenachse keine Kollision zwischen dem Werkstück und dem Spannfutter erfolgen kann.

Der Schwenkarm hat bei einem Ausführungsbeispiel eine Länge von zumindest 60 bis 70 cm. Zur ausreichend genauen Positionierung des Werkstückgreifers muss der Schwenkarm eine hohe Steifigkeit aufweisen. Vorzugsweise hat der Schwenkarm mindestens oder genau zwei voneinander getrennte Armstreben, die an den beiden Enden des Schwenkarms miteinander verbunden sind. Die Armstreben sind zumindest entlang eines mittleren Abschnitts durch einen Spalt voneinander getrennt. Im Bereich der beiden Enden sind die Armstreben miteinander verbunden. Es wird eine hohe Biegesteifigkeit in Umfangsrichtung um die erste Schwenkachse sowie rechtwinklig dazu erreicht. Außerdem kann gleichzeitig das Gewicht des Schwenkarms reduziert werden. Die Armstreben können als massive Körper oder als Hohlkörperprofile ausgeführt sein.

Es ist weiter vorteilhaft, wenn wenigstens zwei der vorhandenen Armstreben zumindest entlang eines Abschnitts in Längsrichtung und/oder in einer Richtung radial zur ersten Schwenkachse zueinander versetzt angeordnet sind. Dadurch lässt sich auch bei im Querschnitt sehr kleinen und leichten Armstreben eine hohe Steifigkeit des Schwenkarms erreichen.

Bei einem Ausführungsbeispiel verlaufen die Armstreben zwischen den beiden Enden des Schwenkarms zumindest abschnittsweise gekrümmt. Die Armstreben sind zumindest nicht vollständig geradlinig oder ausschließlich durch geradlinige Abschnitte zusammengesetzt.

Es ist vorteilhaft, wenn die Armstreben in der Ruhelage des Schwenkarms benachbart zu einem Pneumatikzylinder des ersten Schwenkantriebs angeordnet sind. Dabei kann sich eine Armstrebe in Längsrichtung auf Höhe und in Höhenrichtung unterhalb des Pneumatikzylinders befinden. Die jeweils andere Armstrebe kann sich in Längsrichtung vor und in Höhenrichtung auf Höhe des Pneumatikzylinders befinden. In der Ruhelage entsteht dadurch eine sehr kompakte Anordnung, die wenig Bauraum innerhalb der Werkzeugmaschine beansprucht.

Vorteilhafte Ausgestaltungen der Erfindung ergeben sich aus den abhängigen Patentansprüchen, der Beschreibung sowie der Zeichnungen. Nachfolgend werden bevorzugte Ausführungsbeispiele der Transportvorrichtung anhand der beigefügten Zeichnungen im Einzelnen erläutert. Es zeigen:
Fig. 1 eine perspektivische Ansicht einer Werkzeugmaschine mit einer Transportvorrichtung zum Transportieren eines Werkstücks mit einem in einer Ruhestellung befindlichen Schwenkarm,
Fig. 2 die Werkzeugmaschine aus Fig. 1 mit einem in Arbeitsstellung befindlichen Schwenkarm,
Fig. 3 bis 7 die Transportvorrichtung zum Transportieren des Werkstücks in unterschiedlichen Situationen während des Transports eines Werkstücks aus einem Werkstückträger in ein Spannfutter,
Fig. 8 eine schematische Prinzipdarstellung zur Erläuterung des Maximalabstandes einer Spannachse des Spannfutters von einem Schnittpunkt zwischen einer Werkstücklängsachse und einer zweiten Schwenkachse,
Fig. 9 ein Ausführungsbeispiel einer Greifeinrichtung in einer perspektivischen Darstellung, wobei sich der Schwenkarm in Arbeitsstellung befindet,
Fig. 10 die Greifeinrichtung aus Fig. 9, wobei sich der Schwenkarm in einer Ruhestellung befindet und
Fig. 11 ein Ausführungsbeispiel einer Pneumatikantriebsanordnung zum Betreiben der Greifeinrichtung.

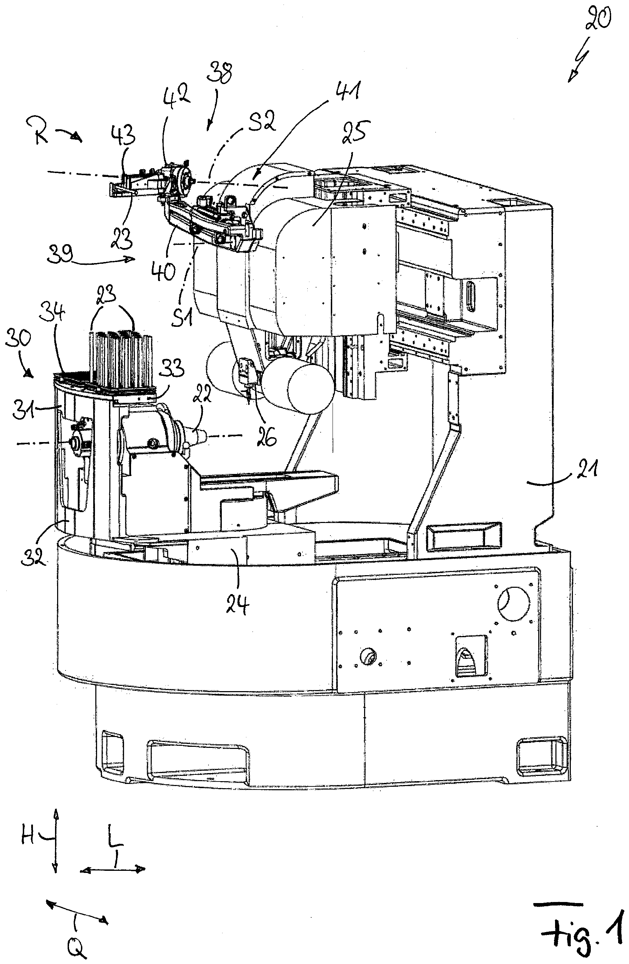

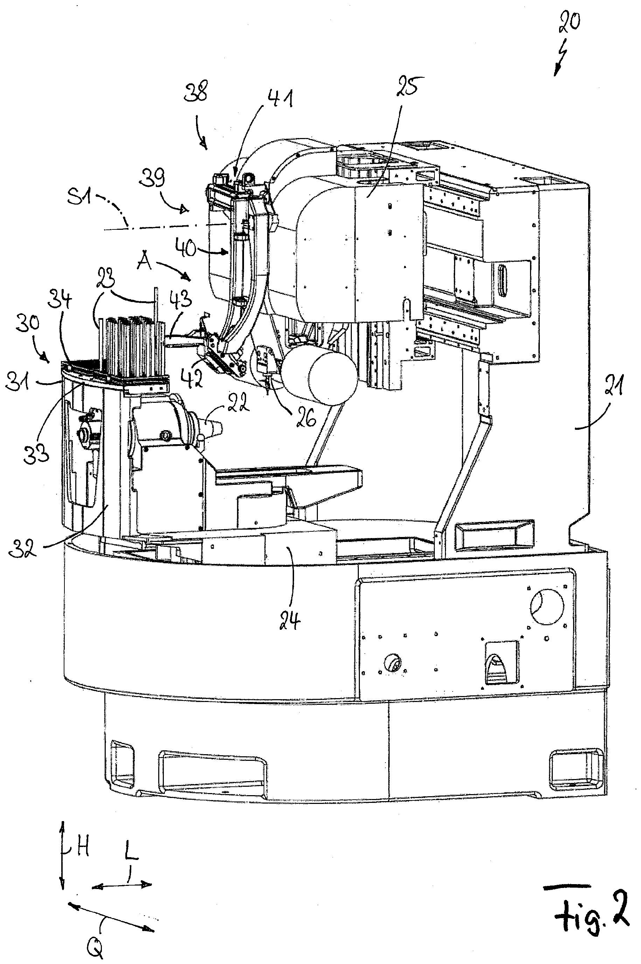

In den Fig. 1 und 2 ist eine Werkzeugmaschine 20 veranschaulicht. Die Werkzeugmaschine 20 hat ein Maschinengestell 21, an dem mehrere lineare und/oder rotative Maschinenachsen vorhanden sind. Die Werkzeugmaschine 20 weist ein Spannfutter 22 zum Einspannen eines zu bearbeitenden Werkstücks 23 auf. Das Spannfutter 22 ist auf einem ersten Maschinenschlitten 24 angeordnet und über den Maschinenschlitten 24 mittels einer linearen Maschinenachse in eine Längsrichtung L verschiebbar.

An einem zweiten Maschinenschlitten 25 ist eine Werkzeugeinheit 26 angeordnet. Der zweite Maschinenschlitten 25 ist beispielsgemäß als Kreuzschlitten ausgeführt und über zwei lineare Maschinenachsen in eine Höhenrichtung H und/oder in eine Querrichtung Q linear bewegbar. Die Höhenrichtung H, die Längsrichtung L und die Querrichtung Q stehen jeweils rechtwinklig aufeinander und bilden ein kartesisches Koordinatensystem der Werkzeugmaschine 20.

Zusätzlich zu den beschriebenen Linearachsen können eine oder mehrere rotative Maschinenachsen vorhanden sein. Bei dem hier gezeigten Ausführungsbeispiel ist eine rotative Maschinenachse zwischen dem Spannfutter 22 und dem ersten Werkzeugschlitten 24 vorgesehen, so dass das Spannfutter 22 um eine sich in Höhenrichtung H erstreckende Achse drehbar bzw. schwenkbar auf dem ersten Maschinenschlitten 24 angeordnet ist. Die Werkzeugmaschine 20 kann bis zu sechs Maschinenachsen für sämtliche lineare und rotative Freiheitsgrade aufweisen.

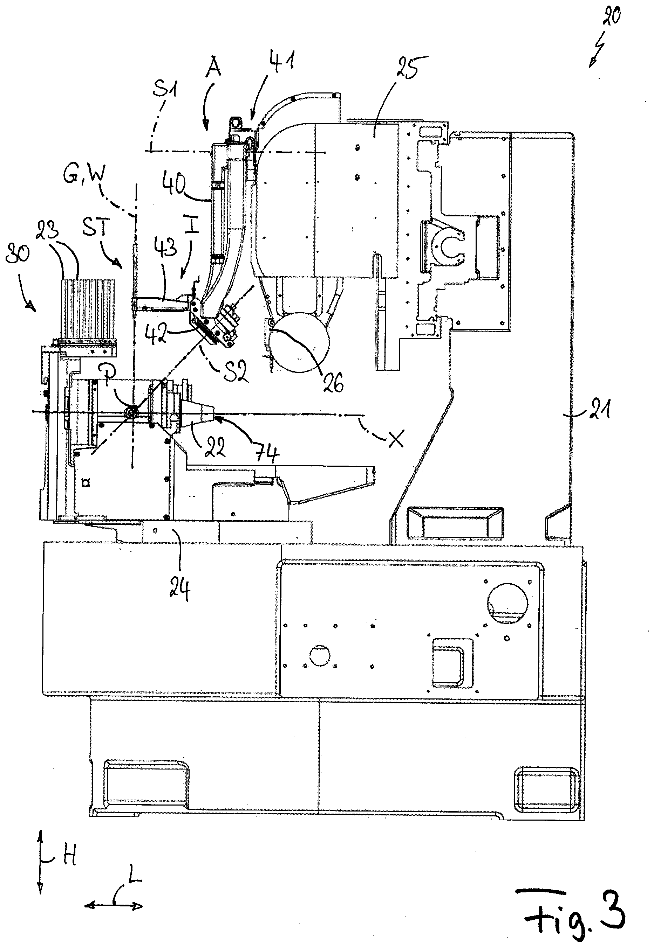

Die Werkstücke 23 sind zumindest abschnittsweise oder vollständig stabförmig mit einer zylindrischen Kontur. Die zylindrische Kontur kann einen kreiszylindrischen oder polygonalen Querschnitt aufweisen. Der stabförmige oder zylindrische Teil des Werkstücks bildet eine Werkstücklängsachse W, die beispielhaft in Fig. 3 veranschaulicht ist.

An dem Maschinengestell 21 ist ein Werkstückträger 30 angeordnet, der keine eigenen Antriebe aufweist. Zu dem Werkstückträger 30 gehört ein Werkstückregal 31, das am Maschinengestell 21 bzw. einem Maschinenbett befestigt sein kann. Bei dem hier beschriebenen Ausführungsbeispiel ist der Werkstückträger 30 an dem ersten Maschinenschlitten 24 befestigt. Der Abstand zwischen dem Werkstückträger 30 zum Spannfutter 22 in Längsrichtung L bleibt vorzugsweise konstant. Das Spannfutter 22 und zumindest dessen Öffnung ist in Längsrichtung L mit Abstand zu dem Werkstückträger 30 angeordnet.

Das Werkstückregal 31 weist eine sich in Höhenrichtung erstreckende Tragstruktur oder Tragwand 32 auf. An der Oberseite der Tragwand 32 ist eine Regalfläche 33 vorhanden, auf der wenigstens eine Werkstückpalette 34 angeordnet oder befestigt werden kann. Bei dem dargestellten Ausführungsbeispiel sind in Querrichtung Q zwei Werkstückpaletten 34 nebeneinander angeordnet. Die eine Werkstückpalette 34 dient zur Aufnahme von unbearbeiteten Werkstücken, während die andere Werkstückpalette 34 bereits bearbeitete Werkstücke 23 aufnimmt. Die Regalfläche 33 und die Werkstückpaletten 34 befinden sich in Höhenrichtung H oberhalb des Spannfutters 22.

Die Werkstückpaletten 34 weisen jeweils eine Mehrzahl von Aufnahmeplätzen für die Werkstücke 23 auf. Die Aufnahmeplätze können durch Löcher oder Öffnungen in der Werkstückpalette 34 gebildet sein. Die Löcher bilden eine zylindrische Kontur, wobei sich die Längsachse der zylindrischen Kontur beispielsgemäß in Höhenrichtung H oder zumindest in etwa in Höhenrichtung H erstreckt.

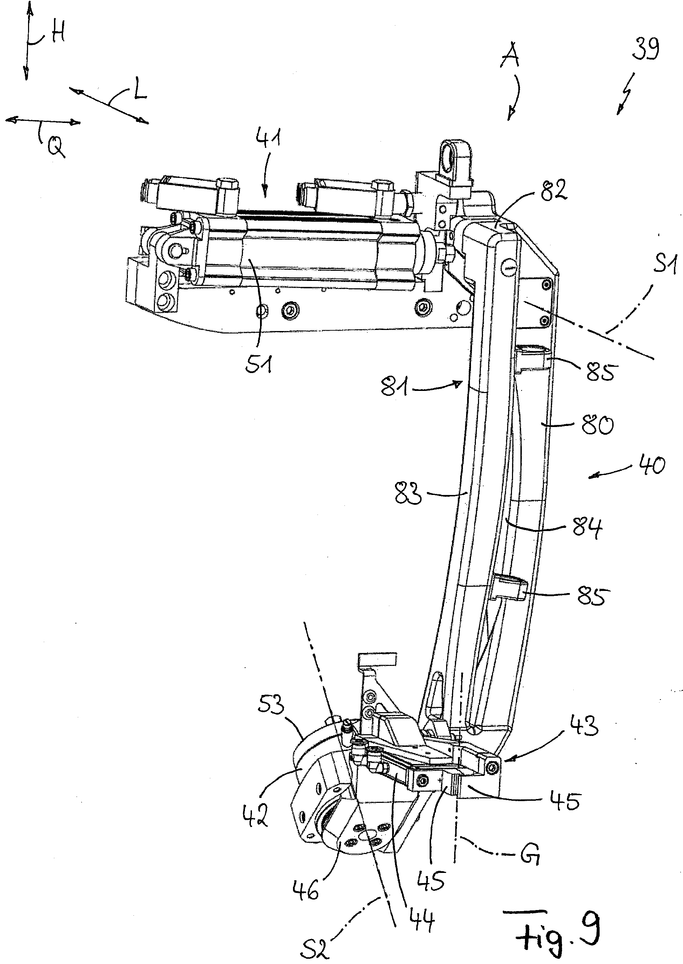

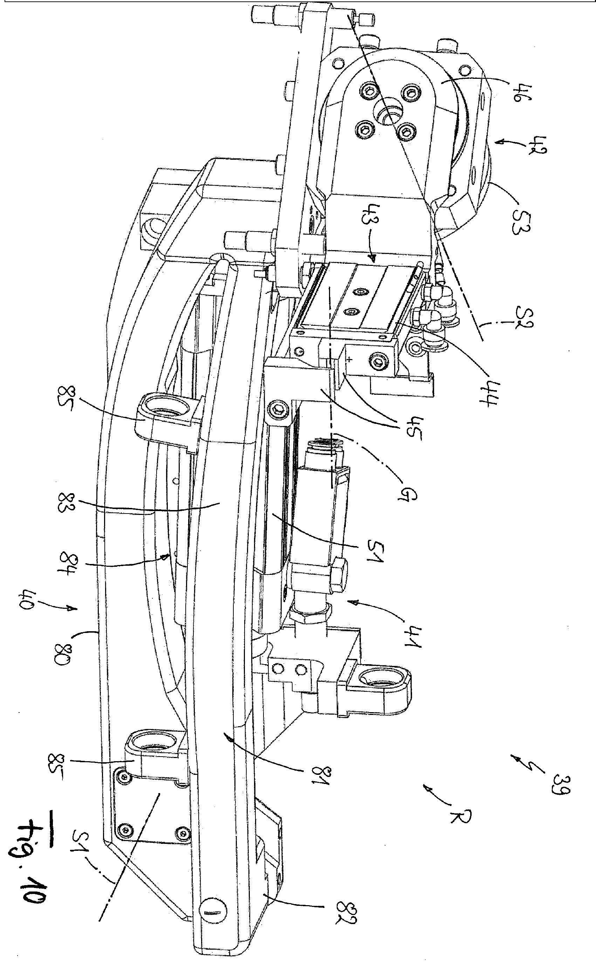

Zum Transportieren eines Werkstücks 23 vom Spannfutter 22 in den Werkstückträger 30 bzw. umgekehrt ist eine Transportvorrichtung 38 vorhanden. Zu der Transportvorrichtung 38 gehört eine Greifeinrichtung 39 mit einem Schwenkarm 40. Der Schwenkarm 40 ist an einem Lagerende mittels eines ersten Schwenkantriebs 41 schwenkbar um eine erste Schwenkachse S1 an dem zweiten Maschinenschlitten 25 gelagert. Der Schwenkarm 40 kann zwischen einer Ruhestellung R (Fig. 1 und 10) und einer Arbeitsstellung A (Fig. 2 und 9) um die erste Schwenkachse S1 bewegt werden). In der Ruhestellung R erstreckt sich der Schwenkarm 40 im Wesentlichen in Querrichtung Q. In der Arbeitsstellung A erstreckt sich der Schwenkarm 40 in Wesentlichen in Höhenrichtung H und beispielsgemäß ausgehend von der ersten Schwenkachse S1 nach unten.

An dem dem Lagerende entgegengesetzten freien Ende ist an dem Schwenkarm ein zweiter Schwenkantrieb 42 angeordnet. Bei einer Schwenkbewegung des Schwenkarms 40 um die erste Schwenkachse S1 bewegt sich der Schwenkantrieb 42 auf einer Kreisbahn um die erste Schwenkachse S1. Der zweite Schwenkantrieb 42 verbindet einen Werkstückgreifer 43 mit dem Schwenkarm 40. Der Werkstückgreifer 43 ist um eine zweite Schwenkachse S2 des zweiten Schwenkantriebs 42 schwenkbar gegenüber dem Schwenkarm 40 gelagert. Die erste Schwenkachse S1 erstreckt sich beispielsgemäß in Längsrichtung L. Die zweite Schwenkachse S2 ist gegenüber der ersten Schwenkachse S1 bzw. der Längsrichtung L um 45° geneigt. In der Arbeitsposition A des Schwenkarms 40 erstreckt sich die zweite Schwenkachse S2 in einer Ebene, die durch die Höhenrichtung H und die Längsrichtung L aufgespannt ist. In der Ruhestellung R des Schwenkarms 40 erstreckt sich die Schwenkachse S2 in einer Ebene, die durch die Längsrichtung L und die Querrichtung Q aufgespannt ist.

Der Werkstückgreifer 43 hat zwei über einen Greiferantrieb 44 relativ zueinander bewegbare Greiferbacken 45. Dabei kann eine der beiden Greiferbacken 45 gegenüber einer Halterung 46 des Werkstückgreifers 43 unbeweglich sein und die jeweils andere Greiferbacke 45 relativ zu der Halterung 46 und relativ zur anderen Greiferbacke 45 in wenigstens einem Freiheitsgrad und vorzugsweise einem linearen Freiheitsgrad bewegbar sein. Beispielsgemäß ist einer der beiden Greiferbacken 45 in nur einem Freiheitsgrad bewegbar an der Halterung 46 gelagert, während der andere Greiferbacken 45 fest mit der Halterung 46 verbunden ist. Die Halterung 46 wiederum ist mittels des zweiten Schwenkantriebs 42 um die zweite Schwenkachse S2 schwenkbar.

Der Werkstückgreifer 43 und beispielsgemäß die beiden Greiferbacken 45 definieren eine Greiferachse G. Die Greiferachse G entspricht der Position der Werkstücklängsachse W, die ein durch die Greifeinrichtung 43 gehaltenes Werkstück 23 einnimmt. Die Greiferachse G ist beispielsgemäß durch Anlagestellen oder Klemmstellen der beiden Greiferbacken 45 definiert, die sich parallel zur Greiferachse G erstrecken und an denen ein durch die Greifeinrichtung bzw. die Greiferbacken 45 gehaltenes Werkstück 23 anliegt. Beispielsweise kann wenigstens einer der Greiferbacken eine sich parallel zur Greiferachse G erstreckende nutförmige Vertiefung aufweisen, die zwei relativ zueinander geneigte Flächenabschnitte aufweist und beispielsweise einen V-förmigen Querschnitt haben kann. Somit begrenzen die beiden Greiferbacken 45 einen prismatischen Zwischenraum und können zylindrische Abschnitte des Werkstücks 23 ergreifen.

Die Greiferachse G verläuft in jeder Stellung des Werkstückgreifers 43 um 45° geneigt zur zweiten Schwenkachse S2.

Die Greifeinrichtung 39 ist rein pneumatisch bewegt. Die Kraft zum Bewegen der beweglichen Teile wird ausschließlich durch Druckluft bereitgestellt. Sowohl der erste Schwenkantrieb 41, als auch der zweite Schwenkantrieb 42 sowie der Greiferantrieb 44 werden durch Druckluft angetrieben.

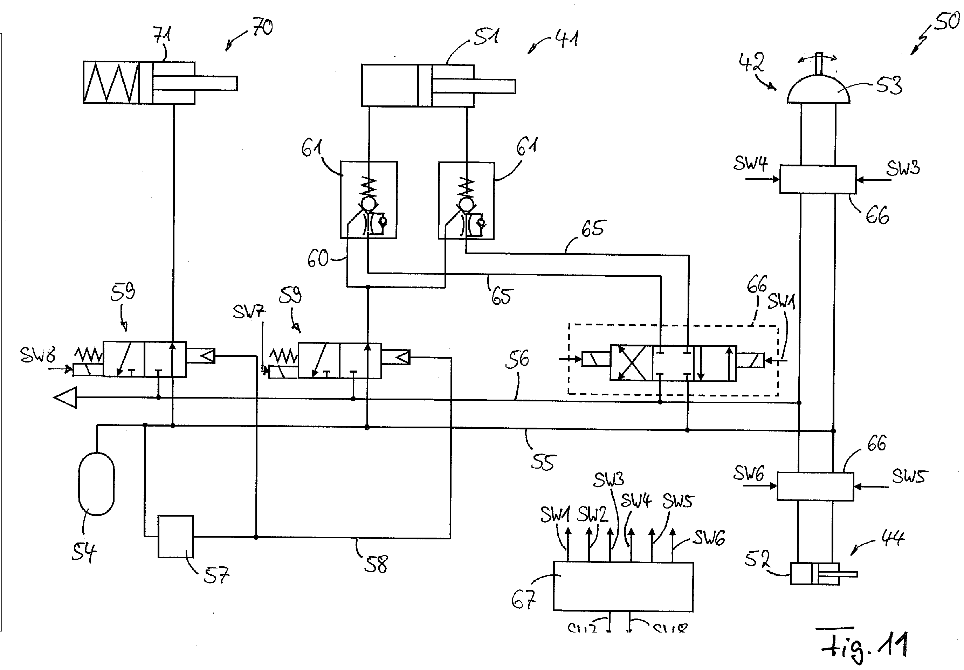

In Fig. 11 ist stark schematisiert und vereinfacht ein Prinzipschaltbild für eine Pneumatikantriebsanordnung 50 veranschaulicht. Die Pneumatikantriebsanordnung 50 weist einen doppelt wirkenden ersten Pneumatikzylinder 51 des ersten Schwenkantriebs 41, einen doppelt wirkenden zweiten Pneumatikzylinder 52 des Greiferantriebs 44 sowie eine Schwenkflügeleinheit 53 für den zweiten Schwenkantrieb 42 auf. Die Schwenkflügeleinheit 53 ist nicht vollständig um 360° drehbar. Der maximale Drehwinkel beträgt zumindest 180°.

Die Pneumatikantriebsanordnung 50 hat eine Druckluftquelle 54, an die eine Versorgungsleitung 55 angeschlossen ist. Außerdem ist eine Abluftleitung 56 zum Entlüften vorgesehen. An die Versorgungsleitung 55 ist eine Druckregeleinheit 57 angeschlossen, die ausgangsseitig an einer Steuerleitung 58 einen pneumatischen Steuerdruck bereitstellt.

An die Versorgungsleitung 55 und die Abluftleitung 56 ist ein druckgesteuertes Sicherheitsventil 59 angeschlossen, das beim Ausführungsbeispiel als 2-Wege-Ventil ausgeführt ist. In der mechanisch vorgespannten Ruhestellung des Sicherheitsventils 59 ist die Versorgungsleitung 55 abgesperrt und der Ausgang des Sicherheitsventils 59 mit der Abluftleitung 56 verbunden. Sobald über die Druckluftquelle 54 an der Versorgungsleitung 55 ein Druck anliegt, liefert die Druckregeleinheit 57 einen Steuerdruck an der Steuerleitung 58 und das Sicherheitsventil 59 wird in die in Fig. 11 veranschaulichte Freigabestellung geschaltet.

Am Ausgang des Sicherheitsventils wird der Steuerdruck aus der Steuerleitung 58 über eine Entsperrleitung an die Steuereingänge zweier entsperrbarer Rückschlagventileinrichtungen 61 übermittelt. Die Rückschlagventile der Rückschlagventileinrichtungen 61 werden dadurch entsperrt und lassen einen Fluidfluss in beide Strömungsrichtungen zu. Die Rückschlagventileinrichtungen 61 haben beim Ausführungsbeispiel außerdem eine Drossel, so dass der Fluidfluss in eine oder beide Strömungsrichtungen gedrosselt werden kann. Wie schematisch veranschaulicht, kann parallel zu der jeweiligen Drossel ein Rückschlagventil geschaltet sein, so dass die Drossel nur in eine Strömungsrichtung wirkt und in der jeweils anderen Strömungsrichtung durch das Rückschlagventil überbrückt wird.

Der erste Pneumatikzylinder 51 ist über zwei Pneumatikleitungen 65 mit einer Steuerventileinrichtung 66 verbunden. Jede Pneumatikleitung 65 verbindet einen Ausgang der Steuerventileinrichtung 66 mit einer der beiden Arbeitskammern des ersten Pneumatikzylinders 51. In jeder Pneumatikleitung 65 sitzt eine Rückschlagventileinrichtung 61. Beispielsgemäß wird dabei die Strömung zum Pneumatikzylinder 51 ungedrosselt ermöglicht, während die Rückströmung vom Pneumatikzylinder 51 zur Steuerventileinrichtung 66 über die jeweilige Drossel der Rückschlagventileinrichtung 61 erfolgt. Diese Rückströmung ist nur dann möglich, wenn die Rückschlagventileinrichtungen 61 über die Steuereingänge entsperrt sind.

Die Steuerventileinrichtung 66 ist beim Ausführungsbeispiel durch ein elektrisch ansteuerbares 3-Wege-Ventil gebildet. Der eine Eingang ist mit der Versorgungsleitung 55 verbunden, während der andere Eingang mit der Abluftleitung 56 verbunden ist. In einer Neutralstellung der Steuerventileinrichtung 66 sind alle Eingänge und Ausgänge gesperrt. Durch ein erstes Schaltsignal SW1 und ein zweites Schaltsignal SW2 einer Steuereinrichtung 67 kann die Steuerventileinrichtung 66 in zwei Schaltstellungen umgeschaltet werden, in der jeweils die eine Arbeitskammer des ersten Pneumatikzylinders 51 mit der Versorgungsleitung und die jeweils andere Arbeitskammer mit der Abluftleitung 56 pneumatisch verbunden ist. Somit kann die Kolbenstange des ersten Pneumatikzylinders 51 abhängig von der Schaltstellung der Steuerventileinrichtung 66 eingefahren, ausgefahren oder in der aktuellen Position gehalten werden. Durch die lineare Bewegung der Kolbenstange des ersten Pneumatikzylinders 51 kann der Schwenkarm um die erste Schwenkachse S1 geschwenkt werden. Die Kolbenstange des ersten Pneumatikzylinders 51 greift hierfür versetzt zu der ersten Schwenkachse S1 im Bereich des Lagerendes des Schwenkarmes 40 an und kann so ein Moment um die erste Schwenkachse S1 erzeugen, wenn die Kolbenstange ein- bzw. ausgefahren wird.

Analog zu dem ersten Pneumatikzylinder 51 sind auch die Schwenkflügeleinheit 53 des zweiten Schwenkantriebs 42 und der doppelt wirkende zweite Pneumatikzylinder 52 des Greiferantriebs 44 über jeweils eine Steuerventileinrichtung 66 sowohl mit der Versorgungsleitung 55 als auch mit der Abluftleitung 56 pneumatisch verbunden. Entsprechend dem ersten Pneumatikzylinder 51 lassen sich auch die anderen pneumatischen Antriebseinheiten 52, 53 mittels der jeweiligen Steuerventileinrichtung 66 steuern. Hierfür stellt die Steuereinrichtung 67 ein drittes Schaltsignal SW3, ein viertes Schaltsignal SW4 für die Steuerventileinrichtung 66 der Schwenkflügeleinheit 53 und ein fünftes Schaltsignal SW5 sowie ein sechstes Schaltsignal SW6 für die Steuerventileinrichtung 66 des zweiten Pneumatikzylinders 52 bereit.

Die Pneumatikantriebsanordnung 50 hat beispielsgemäß eine Verriegelungseinrichtung 70, die dazu eingerichtet ist, den Schwenkarm 40 in seiner Ruhestellung R zu blockieren. Dadurch kann verhindert werden, dass durch eine Undichtigkeit im ersten Pneumatikzylinder 51 ein schleichendes Absenken des Schwenkarms aus der Ruhestellung R erfolgt. Die Verriegelungseinrichtung 70 blockiert den Schwenkarm 40 in seiner Ruhestellung R mechanisch. Hierfür weist die Verriegelungseinrichtung 70 beispielsgemäß einen einfach wirkenden dritten Pneumatikzylinder 71 auf. Über eine Druckbeaufschlagung der Arbeitskammer kann der dritte Pneumatikzylinder 71 in seine Freigabestellung bewegt werden, so dass eine Schwenkbewegung des Schwenkarms 40 um die erste Schwenkachse S1 ermöglicht ist. Sobald in der Arbeitskammer des dritten Pneumatikzylinders 71 kein ausreichender Druck anliegt, fährt die Kolbenstange aus und verriegelt den Schwenkarm 40, wenn sich dieser in seiner Ruhestellung R befindet. Hierfür ist der Kolben bzw. die Kolbenstange mechanisch in die Verriegelungsstellung vorgespannt.

Zwischen der Arbeitskammer des dritten Pneumatikzylinders und der Versorgungsleitung 55 bzw. der Abluftleitung 56 ist ein weiteres Sicherheitsventil 59 angeordnet. Beide Sicherheitsventile 59 werden über die pneumatische Steuerleitung 58 angesteuert und verbinden ihren jeweiligen Ausgang mit der Versorgungsleitung 55, wenn ein pneumatischer Druck in der Steuerleitung 58 anliegt. Entgegen diesem Steuerdruck können die beiden Sicherheitsventile 59 unabhängig voneinander durch ein siebtes Umschaltsignal SW7 oder ein achtes Umschaltsignal SW8 der Steuereinrichtung 67 in eine Stellung umgeschaltet werden, in der der Ausgang des Sicherheitsventils mit der Abluftleitung 56 verbunden ist. Diese Stellung nehmen die Sicherheitsventile 59 auch dann ein, wenn der pneumatische Druck in der Steuerleitung 58 unter einen Mindestdruck absinkt.

Somit dient die Steuereinrichtung 67 dazu, die Schwenkantriebe 41, 52 und den Greiferantrieb 44 anzusteuern, um den Schwenkarm 40 um die erste Schwenkachse S1 zu schwenken oder um die Greifeinrichtung 43 um die zweite Schwenkachse S2 zu schwenken oder um die Greiferbacken zum Greifen eines Werkstücks 23 zu schließen oder zum Freigeben eines Werkstücks 23 zu öffnen.

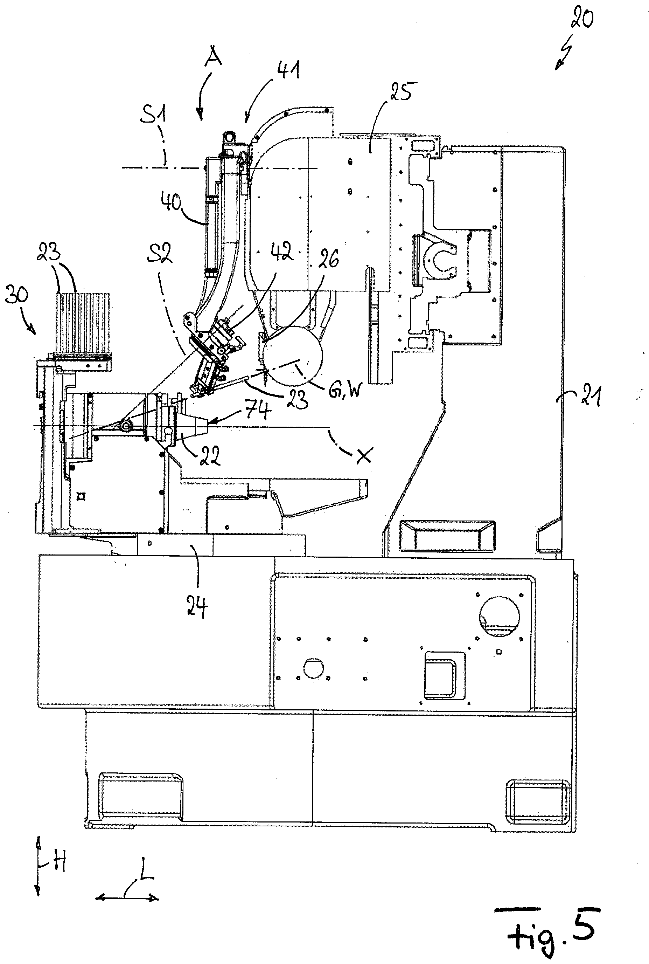

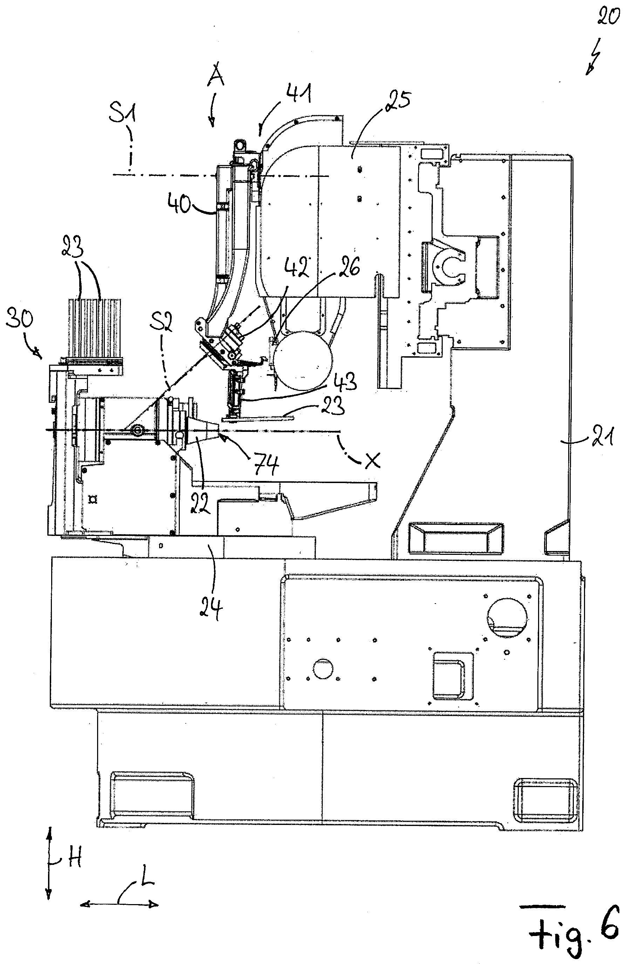

Anhand der Fig. 3-8 wird der Ablauf beim Transport eines Werkstücks zwischen dem Werkstückträger 30 und dem Spannfutter 22 im Einzelnen erläutert.

Es sei angenommen, dass in der Ausgangssituation kein Werkstück 23 im Spannfutter 22 eingespannt ist. Über die Transportvorrichtung 38 soll ein noch nicht bearbeitetes Werkstück 23 aus dem Werkstückträger 30 entnommen und in das Spannfutter 22 eingespannt werden.

Zunächst wird der Schwenkarm 40 der Greifeinrichtung 39 in seine Arbeitsstellung A geschwenkt. Der Werkstückgreifer befindet sich in einer ersten Lage I, in der die Greiferachse G rechtwinklig zur ersten Schwenkachse S1 ausgerichtet ist und sich in etwa in Höhenrichtung H erstreckt. Mit Hilfe der Maschinenachsen wird der Werkstückgreifer 43 zu dem zu entnehmenden Werkstück 23 gefahren und so positioniert, dass die Greiferachse G mit der Werkstücklängsachse W des aufzunehmenden Werkstücks 23 übereinstimmt. Anschließend wird das Werkstück 23 durch das Verschieben einer Greiferbacke 45 geklemmt.

Über eine Maschinenachse wird die Greifeinrichtung 39 in Höhenrichtung H angehoben, so dass das Werkstück 23 aus dem Loch der Werkstückpalette 34 vollständig herausgeführt ist. Im Anschluss daran wird durch eine Bewegung einer Maschinenachse in Längsrichtung L der Werkstückgreifer 43 in eine Schwenktransferstellung ST bewegt (fig. 3). Der Werkstückgreifer 43 befindet sich dabei immer noch in seiner ersten Lage I. In dieser ersten Lage I bilden die zweite Schwenkachse S2 und die Greiferachse G bzw. die Werkstücklängsachse W des vom Werkstückgreifer 43 gehaltenen Werkstücks 23 einen Schnittpunkt P. Es ist anders als beim Ausführungsbeispiel auch möglich, dass die zweite Schwenkachse S2 in Querrichtung Q versetzt zur Greiferachse G verläuft, wobei der Schnittpunkt P dann durch die Projektion in eine gemeinsame Ebene gebildet ist, die durch die Höhenrichtung H und die Längsrichtung L aufgespannt wird. Der Schnittpunkt P in der ersten Lage I des Werkstückgreifers 43 und die Schwenktransferposition ST des Werkstücks 23 sind in Fig. 3 veranschaulicht.

Das Spannfutter 22 definiert eine Spannachse X. Ein im Spannfutter 22 ideal eingespanntes Werkstück 23 weist eine Werkstücklängsachse W auf, die mit der Spannachse X fluchtet. Die Spannachse X ist somit die Mittellängsachse des Spannfutters 22.

In der Schwenktransferposition ST des Werkstücks 23 ist der Abstand des Werkstücks 23 in Höhenrichtung H von der Spannachse X mindestens so groß wie der Abstand einer Einspannseite 74 des Spannfutters 22 von der Greiferachse G bzw. der Werkstücklängsachse W des in der Schwenktransferposition ST gehaltenen Werkstücks 23, wobei der Abstand der Einspannseite 74 von der Greiferachse G entlang der Spannachse X betrachtet wird. Dadurch ist sichergestellt, dass durch eine Schwenkbewegung des zweiten Schwenkantriebs 42 um die zweite Schwenkachse S2 um 180° eine Kollision des Werkstücks 23 mit dem Spannfutter 22 verhindert ist.

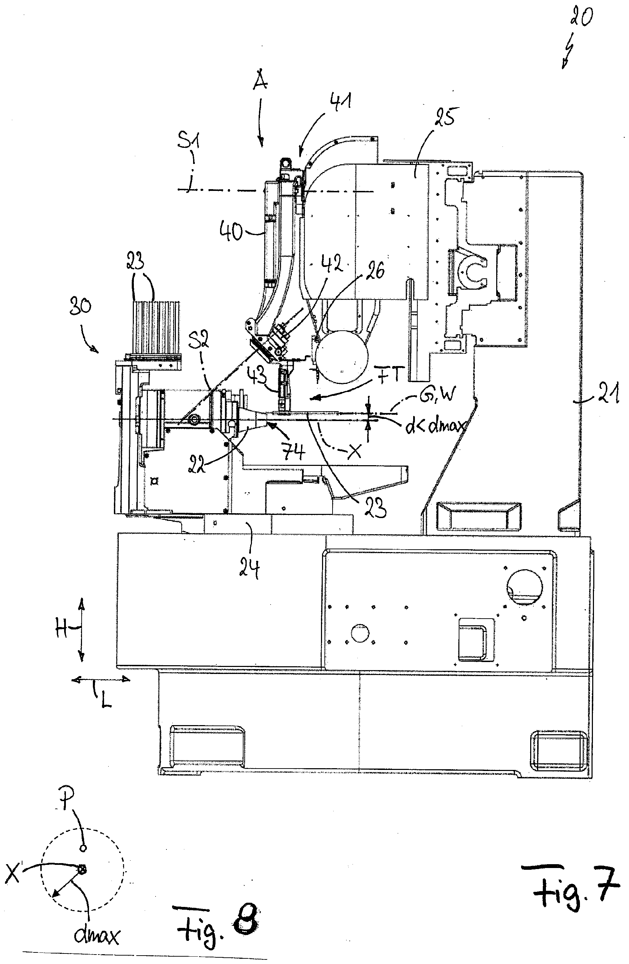

Wie in Fig. 3 schematisch veranschaulicht, ist die Schwenktransferposition ST idealerweise so gewählt, dass die Spannachse X durch den Schnittpunkt P verläuft. Ist dies der Fall, kann durch eine 180° Schwenkbewegung um die zweite Schwenkachse S2 die Werkstücklängsachse W fluchtend mit der Spannachse X ausgerichtet werden. Zumindest ist die Schwenktransferposition ST so gewählt, dass der Schnittpunkt P und die Spannachse X einen Maximalabstand dmax aufweisen (Fig. 8). Entlang der Spannachse X betrachtet befindet sich der Schnittpunkt P innerhalb einer Kreisfläche mit dem Radius dmax um die Spannachse X.

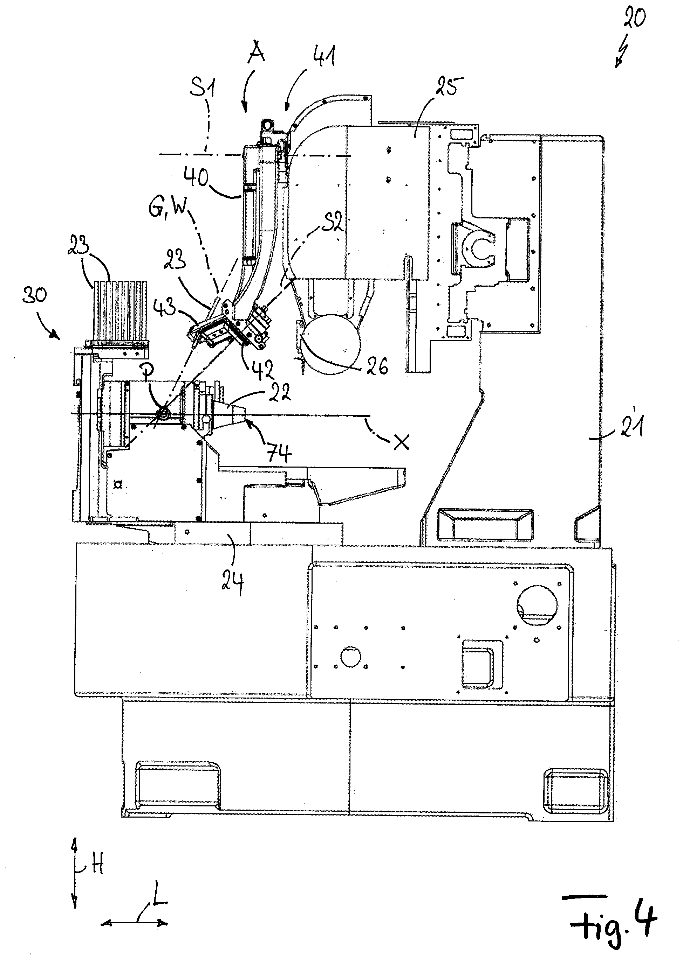

Aus der Schwenktransferposition ST wird das vom Werkstückgreifer 43 gehaltene Werkstück 23 mittels des zweiten Schwenkantriebs 42 um 180° um die zweite Schwenkachse S2 geschwenkt. Der Verlauf dieser Schwenkbewegung ist schematisch in den Fig. 4-6 veranschaulicht. Vorzugsweise stehen dabei alle anderen Maschinenachsen der Werkzeugmaschine 20 still.

Nachdem die Drehung um 180° um die zweite Schwenkachse S2 erfolgt ist, nimmt der Werkstückgreifer 43 eine zweite Lage II ein, in der die Greiferachse G verglichen mit der Ausrichtung in der ersten Lage I um 90° gedreht ist. Die Greiferachse G verläuft in der zweiten Lage II in Längsrichtung L. Die Spannachse X ist parallel zur Längsachse L ausgerichtet. Das vom Werkstückgreifer 43 gehaltene Werkstück 23 wurde ausgehend von der Schwenktransferposition ST in Fig. 4 in die Futtertransferposition FT überführt (Fig. 7). Die Werkstücklängsachse W erstreckt sich beispielsgemäß parallel zur oder idealerweise fluchtend mit der Spannachse X.

Im hier geschilderten Beispielfall kann in der Futtertransferposition FT des Werkstückgreifers 43 ein Abstand d zwischen der Werkstücklängsachse W bzw. der Greiferlängsachse G einerseits und der Spannachse X andererseits bestehen. Dieser Abstand d wird zum Einfuttern bzw. Einspannen des Werkstücks 23 durch die Ansteuerung wenigstens einer Maschinenachse der Werkzeugmaschine 20 reduziert, bis der Abstand d gleich Null ist oder zumindest innerhalb einer vorgegebenen Toleranz liegt. Wenn zu dieser Ausgleichsbewegung lineare Maschinenachsen verwendet werden, kann es ausreichend sein, die lineare Maschinenachse zur Bewegung des Spannfutters 22 oder der Greifeinrichtung 39 in Höhenrichtung H anzusteuern. Besteht zwischen der Spannachse X und der Werkzeuglängsachse W in der Futtertransferposition FT auch eine Abweichung in Querrichtung Q, so muss eine zweite lineare Maschinenachse zusätzlich angesteuert werden. Vorzugsweise ist die Werkstücklängsachse W bereits in der Schwenktransferposition ST so ausgerichtet, dass sie die Spannachse X schneidet und mithin in einer gemeinsamen Ebene, die durch die Höhenrichtung H und die Längsrichtung L aufgespannt ist, verläuft. In diesem Fall reicht eine Ausgleichsbewegung zur Feinjustierung durch eine Maschinenachse in Höhenrichtung H ausgehend von Futtertransferposition FT aus.

Sobald die Werkstücklängsachse W ausreichend genau mit der Spannachse X übereinstimmt, kann durch eine Linearbewegung einer Maschinenachse in Längsrichtung L das Werkstück 23 in das Spannfutter 22 eingesetzt und dort eingespannt werden. Der Werkstückgreifer 43 gibt das Werkstück 23 frei und wird anschließend in seine erste Lage I zurückgeschwenkt. Anschließend oder gleichzeitig wird der Schwenkarm 40 in die erste Schwenkachse S1 in seine Ruhestellung R geschwenkt. Sobald die Ruhestellung R erreicht ist, kann mit der Werkzeugeinheit 26 eine Bearbeitung des Werkstücks 23 erfolgen.

Der Ablauf des Transports eines bereits bearbeiteten Werkstücks 23 von dem Spannfutter 22 in den Werkstückträger 30 erfolgt umgekehrt. Nachdem das bearbeitete Werkstück 23 aus dem Spannfutter 22 in Längsrichtung L herausgenommen wurde, wird anschließend über den zweiten Schwenkantrieb 42 eine 180°-Schwenkbewegung um die zweite Schwenkachse S2 ausgeführt. Über die Maschinenachsen wird dann das bearbeitete Werkstück 23 in dem Werkstückträger 30 abgelegt. Anschließend kann aus dem Werkstückträger 30 ein nicht bearbeitetes Werkstück entnommen und gemäß dem vorstehend beschriebenen Ablauf in das Spannfutter 22 eingesetzt werden.

Beispielsgemäß ist eine Überwachung des Werkstückgreifers 43 realisiert, wenn sich der Werkstückgreifers 43 in seiner zweiten Lage II befindet. Hierbei wird der des Werkstückgreifer 43 auf Annäherung an eine Störkontur und/oder Zug bzw. Druck in Längsrichtung L überwacht. Die Überwachung erfolgt z.B. über wenigstens einen oder zwei induktive Sensoren, die an dem Werkstückgreifer 43 angeordnet sind. Dadurch können Kollisionen des Werkstückgreifers 43 mit einer Störkontur vermieden oder die Schäden bei einer Kollision bzw. Berührung verhindert oder gemindert werden.

Um eine exakte Positionierung des Werkstückgreifers 43 bzw. des vom Werkstückgreifer 43 gehaltenen Werkstücks 23 zu erreichen, muss der Schwenkarm 40 ausreichend biegesteif sein. Der Schwenkarm 40 ist beispielsgemäß durch eine erste Armstrebe 80 und eine zweite Armstrebe 81 gebildet, die jeweils als massive Körper oder als Hohlprofilkörper mit beispielsgemäß rechteckähnlichem Querschnitt ausgeführt sein können. Die beiden Armstreben 80, 81 sind an den beiden Enden des Schwenkarms 40 miteinander verbunden. Die Schwenklagerung des Schwenkarms 40 um die erste Schwenkachse S1 ist an der ersten Armstrebe 80 vorgesehen. Im Bereich der Schwenklagerung für die erste Schwenkachse S1 weist die zweite Armstrebe 81 ein Endstück 82 auf, das sich in etwa in Richtung der ersten Schwenkachse S1 erstreckt. An dieses Endstück 82 schließt sich ein Armabschnitt 83 an, der ausgehend von dem Endstück 82 zum anderen, freien Ende des Schwenkarms 40 hin verläuft. Im Anschluss an das Endstück 82 ist der Armabschnitt 83 parallel zur ersten Schwenkachse S1 gegenüber der ersten Armstrebe 80 versetzt und beispielsgemäß vom ersten Schwenkantrieb 41 bzw. den zweiten Maschinenschlitten 25 weg versetzt. Dieser Versatz wird über eine Länge des Armabschnitts 38 aufrechterhalten, der zumindest der Länge des ersten Pneumatikzylinders 51 entspricht. Der Betrag des Versatzes ist entlang dieser Länge des Armabschnitts 38 stets größer als null, muss aber nicht konstant sein.

Die beiden Armstreben 80, 81 sind außerdem in einer Richtung rechtwinklig zur ersten Schwenkachse S1 versetzt nebeneinander angeordnet. In der Arbeitsstellung A sind die beiden Armstreben 80, 81 dadurch in Querrichtung Q versetzt nebeneinanderliegend angeordnet. Befindet sich der Schwenkarm 40 in der Ruhestellung R, sind die beiden Armstreben 80, 81 in Höhenrichtung H versetzt nebeneinanderliegend angeordnet.

Zwischen dem Armabschnitt 83 der zweiten Armstrebe 81 und der ersten Armstrebe 80 ist ein Spalt 84 gebildet. Benachbart zu diesem Spalt 84 können an dem Armabschnitt 83 Befestigungen 85 für pneumatische Leitungen und/oder elektrische Leitungen angeordnet sein. Die Befestigungen 85 ragen von dem Armabschnitt 83 weg und befinden sich in Richtung der ersten Schwenkachse S1 betrachtet vor der ersten Armstrebe 80.

Der Versatz der beiden Armstreben 80, 81 in Richtung der ersten Schwenkachse S1 besteht am freien Ende des Schwenkarms 40, an dem sich der zweite Schwenkantrieb 42 befindet, nicht mehr.

Die beiden Armstreben 80, 81 verlaufen zwischen ihren beiden Enden zumindest abschnittsweise gekrümmt. Die Gestalt des Schwenkarms 40 entspricht dem Prinzip eines menschlichen Unterarmknochens, der ebenfalls durch zwei separate Knochen (Elle und Speiche) gebildet ist.

Wie in Fig. 10 zu erkennen ist, benötigt die Greifeinrichtung 39 in der Ruhelage R des Schwenkarms 40 nur einen geringen Bauraum. Die erste Armstrebe 80 befindet sich in Höhenrichtung H betrachtet unterhalb des ersten Pneumatikzylinders 51 des ersten Schwenkantriebs 41. Der Armabschnitt 83 der zweiten Armstrebe 81 ist in Längsrichtung gesehen vor dem ersten Pneumatikzylinder 51 angeordnet. Der ersten Pneumatikzylinder 51 wird sozusagen in einem Bereich über der ersten Armstrebe 80 und hinter der zweiten Armstrebe 81 aufgenommen.

Somit ist durch den versetzten Verlauf der beiden Armstreben 80, 81 nicht nur eine hohe Biegesteifigkeit des Schwenkarms 40 erreicht, sondern außerdem kann eine platzsparende Anordnung in der Ruhestellung R des Schwenkarms 40 erreicht werden.

Um die Bewegung des Schwenkarms 40 bei Erreichen der Ruhestellung R oder der Arbeitsstellung A zu dämpfen, können dem Schwenkarm 40 bzw. dem ersten Pneumatikzylinder 51 Endlagendämpfer zugeordnet sein. Die Endlagendämpfer können als externe Stoßdämpfer und/oder als interne Endlagendämpfer des ersten Pneumatikzylinders 51 ausgeführt sein.

Die Erfindung betrifft eine Werkzeugmaschine mit einer Transportvorrichtung 38 zum Transportieren eines Werkstücks 23 zwischen einem Spannfutter 22 und einem Werkstückträger 30. Die Transportvorrichtung 38 hat eine Greifeinrichtung 39 mit einem Schwenkarm 40. Ein Ende des Schwenkarms 40 ist über einen ersten Schwenkantrieb 41 um eine erste Schwenkachse S1 schwenkbar an der Werkzeugmaschine 20 und insbesondere einem Maschinenschlitten 25 gelagert. An dem anderen Ende trägt der Schwenkarm 40 einen zweiten Schwenkantrieb 42, der eine zweite Schwenkachse S2 definiert. Um diese zweite Schwenkachse S2 ist ein Werkstückgreifer 43 schwenkbar gelagert. Die beiden Schwenkachsen sind um 45° zueinander geneigt. Ein vom Werkstückgreifer 43 gehaltenes Werkstück 23 hat eine Werkstücklängsachse W, die in einer ersten Lage I des Werkstückgreifers 43 rechtwinklig zur ersten Schwenkachse S1 verläuft. In einer zweiten Lage II des Werkstückgreifers 43 ist die Werkstücklängsachse W parallel zur ersten Schwenkachse S1 ausgerichtet. Die Werkstücklängsachse W des vom Werkstückgreifer 43 gehaltenen Werkstücks 23 ist um 45° gegenüber der zweiten Schwenkachse S2 geneigt.

### Bezugszeichenliste:

- 20: Werkzeugmaschine
- 21: Maschinengestell
- 22: Spannfutter
- 23: Werkstück
- 24: erster Maschinenschlitten
- 25: zweiter Maschinenschlitten
- 26: Werkzeugeinheit

- 30: Werkstückträger
- 31: Werkstückregal
- 32: Tragwand
- 33: Regalfläche
- 34: Werkstückpalette

- 38: Transportvorrichtung
- 39: Greifeinrichtung
- 40: Schwenkarm
- 41: erster Schwenkantrieb
- 42: zweiter Schwenkantrieb
- 43: Werkstückgreifer
- 44: Greiferantrieb
- 45: Greiferbacken
- 46: Halterung

- 50: Pneumatikantriebsanordnung
- 51: erster Pneumatikzylinder
- 52: zweiter Pneumatikzylinder
- 53: Schwenkflügeleinheit
- 54: Druckluftquelle
- 55: Versorgungsleitung
- 56: Abluftleitung
- 57: Druckregeleinheit
- 58: Steuerleitung
- 59: Sicherheitsventil
- 60: Entsperrleitung
- 61: Rückschlagventileinrichtung

- 65: Pneumatikleitung
- 66: Steuerventileinrichtung
- 67: Steuereinrichtung

- 70: Verriegelungseinrichtung
- 71: dritten Pneumatikzylinder

- 74: Einspannseite

- 80: erste Armstrebe
- 81: zweite Armstrebe
- 82: Endstück
- 83: Armabschnitt
- 84: Spalt
- 85: Befestigung

- I: ersten Lage
- II: zweite Lage

- A: Arbeitsstellung
- dmax: Maximalabstand
- FT: Futtertransferposition
- G: Greiferachse
- H: Höhenrichtung
- L: Längsrichtung
- P: Schnittpunkt
- Q: Querrichtung
- R: Ruhestellung
- S1: erste Schwenkachse
- S2: zweite Schwenkachse
- ST: Schwenktransferposition
- W: Werkstücklängsachse
- X: Spannachse

## Patentansprüche

1. Werkzeugmaschine (20) mit einer Transportvorrichtung (38) zum Transportieren eines zumindest abschnittsweise stabförmigen Werkstücks (23), das eine Werkstücklängsachse (W) aufweist, zwischen einem Spannfutter (22) und einem Werkstückträger (30) in der Werkzeugmaschine (20), wobei das Spannfutter (22) auf einem mittels einer Maschinenachse bewegbaren ersten Maschinenschlitten (24) der Werkzeugmaschine (20) angeordnet ist, mit einer Greifeinrichtung (39), die einen Schwenkarm (40) aufweist, der mit einem Ende an einem ersten Schwenkantrieb (41) angeordnet ist, mittels dem er um eine erste Schwenkachse (S1) schwenkbar an der Werkzeugmaschine (20) gelagert ist, und der an seinem anderen Ende einen zweiten Schwenkantrieb (42) aufweist, an dem ein Werkstückgreifer (43) zum Greifen des Werkstücks (23) um eine zweite Schwenkachse (S2) schwenkbar gelagert ist, wobei der Schwenkarm (40) mittels des ersten Schwenkantriebes (41) an einem zweiten Maschinenschlitten (25) der Werkzeugmaschine (20) angeordnet ist,
mit einer Steuereinrichtung (67) zur Ansteuerung der Schwenkantriebe (41, 42),
wobei sich die erste Schwenkachse (S1) in eine Längsrichtung (L) erstreckt und die zweite Schwenkachse (S2) gegenüber der Längsrichtung (L) um 45° geneigt ist, wobei die Werkstücklängsachse (W) eines von dem Werkstückgreifer (43) gehaltenen Werkstücks (23) gegenüber der zweiten Schwenkachse (S2) um 45° geneigt ist, wobei der Werkstückgreifer (43) mittels des zweiten Schwenkantriebs (41) zwischen einer ersten Lage (I) und einer zweiten Lage (II) bewegbar ist,
wobei sich die Werkstücklängsachse (W) in der ersten Lage (I) des Werkstückgreifers (43) rechtwinkelig zu der Längsrichtung (L) und in der zweiten Lage (II) des Werkstückgreifers (43) parallel zu der Längsrichtung (L) erstreckt und wobei der Abstand des Werkstückgreifers (43) von der ersten Schwenkachse (S1) in der ersten Lage (I) kleiner ist als in der zweiten Lage (II).

2. Werkzeugmaschine nach Anspruch 1,
**dadurch gekennzeichnet, dass** die gesamte Transportvorrichtung (38) einschließlich des Werkstückträgers (30) innerhalb eines Maschinengehäuses integriert ist.

3. Werkzeugmaschine nach Anspruch 1 oder 2,
**dadurch gekennzeichnet, dass** die erste Schwenkachse (S1) horizontal ausgerichtet ist.

4. Werkzeugmaschine nach einem der vorhergehenden Ansprüche,
**dadurch gekennzeichnet, dass** die Spannachse (X) des Spannfutters (22) beim Einsetzen eines Werkstücks (23) in das Spannfutter (22) oder beim Entnehmen eines Werkstücks (23) aus dem Spannfutter (22) in Längsrichtung (L) ausgerichtet ist.

5. Werkzeugmaschine nach einem der vorhergehenden Ansprüche,
**dadurch gekennzeichnet, dass** der Werkstückträger (30) mehrere Aufnahmeplätze für jeweils ein Werkstück (23) aufweist, die derart eingerichtet sind, dass sich die Werkstücklängsachse (W) eines in einem Aufnahmeplatz angeordneten Werkstücks (23) in etwa in einer Höhenrichtung (H) erstreckt, die rechtwinkelig zu der ersten Schwenkachse (S1) ausgerichtet ist.

6. Werkzeugmaschine nach einem der vorhergehenden Ansprüche,
**dadurch gekennzeichnet, dass** der Werkstückgreifer (43) eine Greiferachse (G) definiert, entlang der sich eine Werkstücklängsachse (W) erstreckt, wenn das Werkstück (23) vom Werkstückgreifer (43) gehalten ist.

7. Werkzeugmaschine nach Anspruch 5 und 6,
**dadurch gekennzeichnet, dass** die Greiferachse (G) in der ersten Lage (I) parallel zu der Werkstücklängsachse (W) eines in einem Aufnahmeplatz des Werkstückträgers (30) angeordneten Werkstücks (23) ausgerichtet ist.

8. Werkzeugmaschine nach einem der vorhergehenden Ansprüche ,
**dadurch gekennzeichnet, dass** die Steuereinrichtung (67) dazu eingerichtet ist, die wenigstens eine Maschinenachse zum Transport des Werkstücks (23) anzusteuern.

9. Werkzeugmaschine nach Anspruch 8,
**dadurch gekennzeichnet, dass** die Steuereinrichtung (67) dazu eingerichtet ist, ein aus dem Werkstückträger (30) entnommenes Werkstück (23) mittels wenigstens einer Maschinenachse in eine Schwenktransferposition (ST) zu transportieren, in der die Werkstücklängsachse (W) und die zweite Schwenkachse (S2) einen Schnittpunkt (P) bilden.

10. Werkzeugmaschine nach Anspruch 9,
**dadurch gekennzeichnet, dass** eine Spannachse (X) des Spannfutters (22) den gebildeten Schnittpunkt (P) schneidet oder einen Maximalabstand (dmax) von dem Schnittpunkt (P) aufweist.

11. Werkzeugmaschine nach Anspruch 9 oder 10,
**dadurch gekennzeichnet, dass** die Steuereinrichtung (67) dazu eingerichtet ist, das in der Schwenktransferposition (ST) positionierte Werkstück (23) mittels einer Schwenkbewegung durch den zweiten Schwenkantrieb (42) in eine Futtertransferposition (FT) zu bewegen, in der die Werkstücklängsachse (W) parallel zu einer Spannachse (X) des Spannfutters (22) ausgerichtet ist.

12. Werkzeugmaschine nach einem der Ansprüche 9 bis 11,
**dadurch gekennzeichnet, dass** der Abstand des in der Schwenktransferposition (ST) angeordneten Werkstücks (23) von einer Spannachse (X) des Spannfutter (22) in einer Höhenrichtung (H) mindestens so groß ist wie der Abstand einer Einspannseite (74) des Spannfutters (22) von der Werkstücklängsachse (W) entlang der Spannachse (X) .

13. Werkzeugmaschine nach einem der vorhergehenden Ansprüche,
**dadurch gekennzeichnet, dass** der Schwenkarm (40) zwei durch einen Spalt voneinander getrennte Armstreben (80, 81) aufweist, die an den beiden Enden des Schwenkarms (40) miteinander verbunden sind.

## Claims

1. Machine tool (20) having a transport device (38) for transporting an at least section-wise rod-shaped workpiece (23) that has a workpiece longitudinal axis (W) between a clamping chuck (22) and a workpiece carrier (30) in the machine tool (20), wherein the clamping chuck (22) is arranged on a first machine slide (24) of machine tool (20) that is movable by means of a machine axis,
having a gripper device (39) that comprises a pivot arm (40) that is arranged with one end on a first pivot drive (41) by means of which it is pivotably arranged on the machine tool (20) around a first pivot axis (S1) and that comprises on its other end a second pivot drive (42) on which a workpiece gripper (43) for gripping the workpiece (23) is pivotably arranged around a second pivot axis (S2), wherein the pivot arm (40) is arranged on a second machine slide (25) of machine tool (20) by means of the first pivot drive (41),
having a control device (67) for controlling the pivot drives (41, 42),
wherein the first pivot axis (S1) extends in a longitudinal direction (L) and the second pivot axis (S2) is inclined about 45° relative to the longitudinal direction,
wherein the workpiece longitudinal axis (W) of a workpiece (23) held by the workpiece gripper (43) is inclined about 45° relative to the second pivot axis (S2), wherein the workpiece gripper (43) is movable between a first position (I) and a second position (II) by means of the second pivot drive (41),
wherein the workpiece longitudinal axis (W) extends in the first position (I) of the workpiece gripper (43) orthogonal to the longitudinal direction (L) and in the second position (II) of the workpiece gripper (43) parallel to the longitudinal direction (L) and wherein the distance between the workpiece gripper (43) and the first pivot axis (S1) is smaller in the first position (I) than in the second position (II).

2. Machine tool according to claim 1, **characterized in that** the entire transport device (38) including the workpiece carrier (30) is integrated inside a machine housing.

3. Machine tool according to claim 1 or 2, **characterized in that** the first pivot axis (S1) is orientated horizontally.

4. Machine tool according to any of the preceding claims, **characterized in that** the clamping axis (X) of the clamping chuck (22) is orientated in longitudinal direction (L) during insertion of a workpiece (23) into the clamping chuck (22) or during removing of a workpiece (23) from the clamping chuck (22).

5. Machine tool according to any of the preceding claims, **characterized in that** the workpiece carrier (30) comprises multiple holding spaces for a workpiece (23) respectively that are configured that the workpiece longitudinal axis (W) of a workpiece (23) arranged in a holding space extends approximately in a height direction (H) that is orientated orthogonal to the first pivot axis (S1).

6. Machine tool according to any of the preceding claims, **characterized in that** the workpiece gripper (43) defines a gripper axis (G) along which a workpiece longitudinal axis (W) extends, if the workpiece (23) is held by the workpiece gripper (43).

7. Machine tool according to claim 5 and 6, **characterized in that** the gripper axis (G) is orientated parallel to the workpiece longitudinal axis (W) of a workpiece (23) arranged in a holding space of the workpiece carrier (30) in the first position (I).

8. Machine tool according to any of the preceding claims, **characterized in that** the control device (67) is configured to control the at least one machine axis for transport of the workpiece (23).

9. Machine tool according to claim 8, **characterized in that** the control device (67) is configured to transport a workpiece (23) removed from the workpiece carrier (30) by means of a machine axis in a pivot transfer position (ST) in which the workpiece longitudinal axis (W) and the second pivot axis (S2) define a point of intersection (P).

10. Machine tool according to claim 9, **characterized in that** the clamping axis (X) of the clamping chuck (22) intersects the defined point of intersection (P) or comprises a maximum distance (dmax) from the point of intersection (P) .

11. Machine tool according to claim 9 or 10, **characterized in that** the control device (67) is configured to move the workpiece (23) positioned in the pivot transfer position (ST) in a chuck transfer position (FT) by means of a pivot movement by means of the second pivot drive (42) in which the workpiece longitudinal axis (W) is orientated parallel to a clamping axis (X) of the clamping chuck (22).

12. Machine tool according to any of the claims 9 to 11, **characterized in that** the distance of the workpiece (23) arranged in the pivot transfer position (ST) from a clamping axis (X) of the clamping chuck in a height direction (H) is at least as long as the distance of a clamping side (74) of the clamping chuck (22) from the workpiece longitudinal axis (W) along the clamping axis (X) .

13. Machine tool according to any of the preceding claims, **characterized in that** the pivot arm (40) comprises two arm struts (80, 81) separated by a gap from one another that are connected with each other at the two ends of the pivot arm (40).

## Revendications

1. Machine-outil (20) comprenant un dispositif de transport (38) pour transporter une pièce (23) qui se présente au moins en partie sous forme de tige et comporte un axe longitudinal de pièce (W), entre un mandrin de serrage (22) et un porte-pièce (30) dans la machine-outil (20), le mandrin de serrage (22) étant disposé sur un premier chariot de machine (24) de la machine-outil (20), pouvant être déplacé au moyen d'un axe de machine ; comprenant un dispositif de préhension (39) doté d'un bras pivotant (40) qui est disposé avec une extrémité sur un premier moyen d'entraînement pivotant (41), à l'aide duquel il est monté sur la machine-outil (20) avec possibilité de pivoter autour d'un premier axe de pivotement (S1), et qui présente à son autre extrémité, un deuxième moyen d'entraînement pivotant (42) sur lequel est monté, avec possibilité de pivoter autour d'un deuxième axe de pivotement (S2), un préhenseur de pièce (43) destiné à saisir la pièce (23), le bras pivotant (40) étant disposé à l'aide du premier moyen d'entraînement pivotant (41) sur un deuxième chariot de machine (25) de la machine-outil (20),
comprenant un dispositif de commande (67) destiné à activer les moyens d'entraînement pivotants (41, 42),
le premier axe de pivotement (S1) s'étendant dans une direction longitudinale (L), et le deuxième axe de pivotement (S2) étant incliné de 45° par rapport à la direction longitudinale (L),
l'axe longitudinal de pièce (W) d'une pièce (23) tenue par le préhenseur de pièce (43) étant incliné de 45° par rapport au deuxième axe de pivotement (S2), le préhenseur de pièce (43) pouvant être déplacé par le deuxième moyen d'entraînement pivotant (41) entre une première position (I) et une deuxième position (II),
sachant que dans la première position (I) du préhenseur de pièce (43), l'axe longitudinal de pièce (W) est perpendiculaire à la direction longitudinale (L) et, dans la deuxième position (II) du préhenseur de pièce (43), est parallèle à la direction longitudinale (L), et que la distance du préhenseur de pièce (43) par rapport au premier axe de pivotement (S1) est plus faible dans la première position (I) que dans la deuxième position (II).

2. Machine-outil selon la revendication 1, **caractérisée en ce que** l'ensemble du dispositif de transport (38), y compris le porte-pièce (30), est intégré dans un carter de machine.

3. Machine-outil selon la revendication 1 ou 2, **caractérisée en ce que** le premier axe de pivotement (S1) est orienté horizontalement.

4. Machine-outil selon l'une des revendications précédentes, **caractérisée en ce que** lors de la mise en place d'une pièce (23) dans le mandrin de serrage (22) ou lors du retrait d'une pièce (23) du mandrin de serrage (22), l'axe de serrage (X) du mandrin de serrage (22) est orienté dans le sens longitudinal.

5. Machine-outil selon l'une des revendications précédentes, **caractérisée en ce que** le porte-pièce (30) présente plusieurs emplacements accueillant respectivement une pièce (23), qui sont agencés de manière à ce que l'axe longitudinal de pièce (W) d'une pièce (23) disposée dans un emplacement s'étende à peu près dans une direction de hauteur (H) qui est orientée perpendiculairement au premier axe de pivotement (S1).

6. Machine-outil selon l'une des revendications précédentes, **caractérisée en ce que** le préhenseur de pièce (43) définit un axe de préhenseur (G) le long duquel s'étend un axe longitudinal de pièce (W), lorsque la pièce (23) est tenue par le préhenseur de pièce (43).

7. Machine-outil selon les revendications 5 et 6, **caractérisée en ce que** dans la première position (I), l'axe de préhenseur (G) est orienté parallèlement à l'axe longitudinal de pièce (W) d'une pièce (23) disposée dans un emplacement du porte-pièce (30).

8. Machine-outil selon l'une des revendications précédentes, **caractérisée en ce que** le dispositif de commande (67) est conçu pour activer l'axe de machine, au nombre d'au moins un, en vue du transport de la pièce (23).

9. Machine-outil selon la revendication 8, **caractérisée en ce que** le dispositif de commande (67) est conçu pour transporter une pièce (23), qui a été retirée du porte-pièce (30), à l'aide d'au moins un axe de machine jusqu'à une position de transfert par pivotement (ST) dans laquelle l'axe longitudinal de pièce (W) et le deuxième axe de pivotement (S2) forment un point d'intersection (P).

10. Machine-outil selon la revendication 9, **caractérisée en ce qu'**un axe de serrage (X) du mandrin de serrage (22) coupe le point d'intersection (P) formé ou présente une distance maximale (dmax) par rapport au point d'intersection (P).

11. Machine-outil selon la revendication 9 ou 10, **caractérisée en ce que** le dispositif de commande (67) est conçu pour déplacer la pièce (23), se trouvant dans la position de transfert par pivotement (ST), par un mouvement pivotant initié par le deuxième moyen d'entraînement pivotant (42), dans une position de transfert au mandrin (FT) dans laquelle l'axe longitudinal de pièce (W) est orienté parallèlement à un axe de serrage (X) du mandrin de serrage (22).

12. Machine-outil selon l'une des revendications 9 à 11, **caractérisée en ce que** la distance de la pièce (23), disposée dans la position de transfert par pivotement (ST), par rapport à un axe de serrage (X) du mandrin de serrage (22) est au moins aussi grande dans une direction de hauteur (H) que la distance d'un côté de serrage (74) du mandrin de serrage (22) par rapport à l'axe longitudinal de pièce (W) le long de l'axe de serrage (X).

13. Machine-outil selon l'une des revendications précédentes, **caractérisée en ce que** le bras pivotant (40) présente deux tiges de bras (80, 81) qui sont reliées entre elles aux deux extrémités du bras pivotant (40).
